(19) Europäisches Patentamt
European Patent Office
Office européen des brevets

(11) **EP 2 136 152 B1**

(12) **EUROPEAN PATENT SPECIFICATION**

(45) Date of publication and mention
of the grant of the patent:
**26.12.2018 Bulletin 2018/52**

(51) Int Cl.:
***F24H 7/04*** *(2006.01)*

(21) Application number: **09160636.8**

(22) Date of filing: **19.05.2009**

(54) **Heating System**

Heizsystem

Système de chauffage

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **19.06.2008 GB 0811311
13.11.2008 GB 0820837**

(43) Date of publication of application:
**23.12.2009 Bulletin 2009/52**

(73) Proprietor: **Canetis Technologies Limited
Surrey KT22 8QY (GB)**

(72) Inventor: **Farrell, Christopher
Plymouth, Devon PL6 7EZ (GB)**

(74) Representative: **Beck, Simon Antony
Withers & Rogers LLP
4 More London Riverside
London SE1 2AU (GB)**

(56) References cited:
**EP-A1- 1 801 508       DE-A1- 4 332 141
FR-A1- 2 636 413       GB-A- 2 423 569
JP-A- S59 202 334      US-A- 4 524 909
US-B1- 6 212 894**

**Description**

FIELD OF THE INVENTION

The present invention relates to a heating system where space heating is performed by passing a warm liquid through heat exchange devices.

BACKGROUND OF THE INVENTION

It is known to provide space heating by heating a fluid using a boiler (or heater) and distributing the heated fluid through a network of pipes to perform space heating. The pipes may lead to radiators or may be embedded in floors to provide under floor heating.

The volume of fluid contained in the network may be quite large, and hence a significant amount of heat energy may, at any one time, be regarded as being "in transit" to a place where it is used, such as a radiator.

DE 43 32 141 describes a domestic hot water and space heating system. In order to enhance its domestic hot water capability the boiler is arranged to supply heat to a thermal store. The thermal store can be place in series with the primary heat exchanger to warm water entering the primary heat exchanger before it gets warmed by the gas burner. However, DE 43 32 141 does not disclose operating a pump to pass warm fluid in the delivery network and the space heaters through the thermal store to give heat up to the thermal store at the end of a heating mode where space heating is being stopped.

JP 59202334 discloses a boiler in which water in the primary heat exchanger 4 of the boiler can be pumped into a tank so as to reduce radiative heat loss from the primary heat exchanger.

SUMMARY OF THE INVENTION

According to a first aspect of the present invention there is provided a method of operating a building heating system as claimed in claim 1. It is thus possible to recover heat from the warmed fluid in the delivery network and the space heaters. This heat would normally be "lost" while a building was unoccupied or at least unheated. The invention allows some of this heat to be recovered to a store such that a heating restart can be more aggressive, e.g. rise to a desired temperature more quickly, and also use less energy. In this context, the delivery network is the pipework connecting a heater, such as a boiler, to the space heaters. This is contrasted with flow paths within the heater/boiler itself. These paths internal to the boiler are not, considered to be part of the delivery network.

Alternatively the recovered heat may be used for other purposes, such as improving the flow rate when delivering hot water for washing, bathing and the like. The heat in the thermal store may be used to warm cold water from a cold main prior to entry into the boiler for heating. Because the temperature of water in the cold store can vary over a wide range - roughly ambient (within the building) to 70° or so, then it is desirable to provide a second path for cold water, and to blend the cold water paths together so as to control the temperature of the "cold" water entering the boiler to a target temperature. The target temperature may be in the range of 20° to 30°C, and is preferably near 30°C. The warmed water in the heat store may also be used to provide warmed water to domestic appliances such as washing machines or dishwashers.

The thermal store may be arranged to accept heat inputs from other sources. These may include heat recovery from waste water, or heating from electrical heaters that receive electricity from renewable sources such as local wind turbines or solar panels. The ability to accept energy from wind turbines is especially beneficial. Many domestic wind turbine installations are simply not efficient. This is because even when the turbine owner is permitted to sell energy back to a national grid or other distribution system strict conditions about stability of generation still have to be observed. More worryingly the consumer's association in the United Kingdom performed a test - published in "which" October 2008, page 6, in which during a 4 month test period their turbine generated only 1.8 kilowatt hours of electricity. Furthermore because it needed to be connected to an inverter that needed to be constantly on, the installation as a whole actually consumed more power than it generated.

The present invention allows energy from the wind turbine to be dumped directly into a thermal store without stringent requirements on voltage regulation or stability. Thus more of the available energy can be captured.

Advantageously several thermal stores may be provided. This enables some of the stores to attain a higher temperature than is the case if only one larger thermal store is used.

Preferably an adaptive controller is provided which monitors the demands for hot water made by users. Thus, if the central heating is timed to go off at 22:00 but there is frequently a large demand for hot water at 21:45, the demand being consistent with running of a bath then the controller may adapt the operation of the system so as to retrieve heat from the space heating system when, or just prior, to drawing of hot water for the bath. The adaptive controller may include a neural network or fuzzy logic (both of which can be implemented either in hardware or on a programmable digital computer) so as to learn usage patterns within a dwelling.

Indeed, the heating controller may simply have a button for a user to signal an increase in temperature and one to signal a decrease, and the times of which these are pressed may be used to modify an inbuilt weekly temperature profile.

In order to provide a flexible system, and one which takes account of prevailing or predicted environmental conditions (i.e. temperature and wind speed) the controller may connect to a website, for example one hosted by the controller's manufacturer, to acquire information to modify its operation. In one embodiment, the controller may receive frequent updates of boiler switch on and off times, heater power output, and when to recover heat to the thermal store. These updates can be downloaded to the controller. Suitable data paths exist using, for example, wired telephones, wired internet, the mobile telephone infrastructure or wireless internet.

It is thus possible to use heat held in a heat store to provide a more aggressive start to a space heating system.

Preferably the heat store comprises a well insulated object having a sufficiently high heat capacity to hold a significant proportion of the thermal energy that is, in use, within the space heaters or "in transit" in the delivery network.

The thermal capacity of the heat store needs to be chosen based on the size of the distribution network and the space heaters. The thermal store may be constructed using metal or bricks, but a preferred construction is a tank of water with a heat exchanger located in the tank.

Advantageously the thermal store has a volume that is selected so as to recover a significant proportion of the heat in the delivery network. The thermal store may contain a volume of water that is at least equal to 50% of the volume of water in the delivery network.

BRIEF DESCRIPTION OF THE DRAWINGS

The present invention will be described by way of non-limiting example only with reference to the accompanying Figures, in which:

Figure 1 is a schematic representation of a heating system constituting an embodiment of the present invention;

Figure 2 schematically illustrates an arrangement in which the thermal store is sub-divided into first and second thermal stores;

Figure 3 illustrates a modification in which heat in the thermal store can be removed for other purposes - such as enhancing the supply of hot water for washing.

DESCRIPTION OF A PREFERRED EMBODIMENT OF THE INVENTION

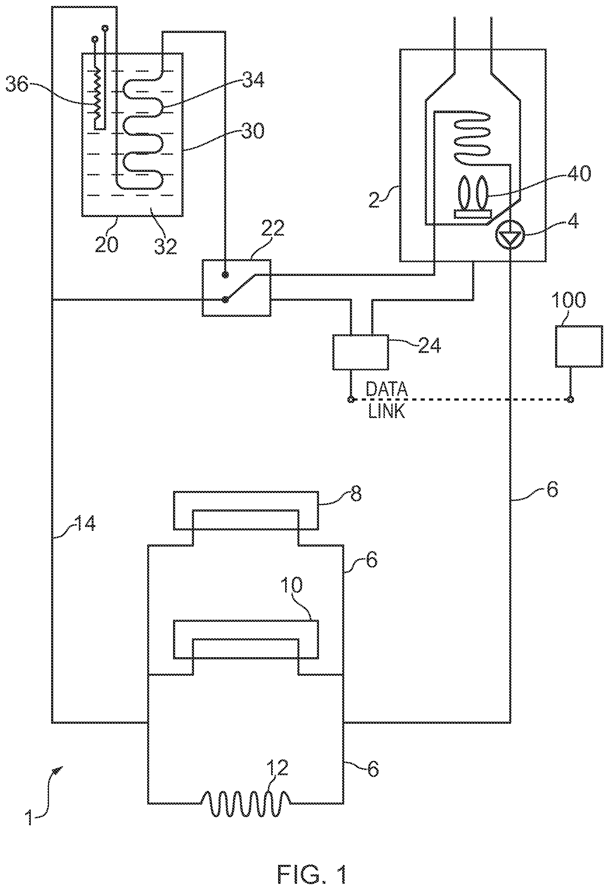

Figure 1 schematically illustrates a heating system 1 constituting an embodiment of the present invention. The heating system comprises a heater 2, which could be any heating source but typically comprises a fossil fuel boiler. The fossil fuel may be coal, oil or gas.

The boiler heats a fluid, which is almost invariably water, and uses a pump 4 to circulate the water through a delivery network 6 to at least one space heater 8, 10, 12. Space heaters 8 and 10 may, for example, be radiators which are common in European homes. A further space heater 12 may be an under floor loop for providing under floor heating.

Water is cooled as it passes through the space heaters and gives its heat up to the enclosed space within a building. The water then flows along a return path 14 of the delivery network back to the heater 2 for reheating. The system described to this part is a conventional space heating arrangement.

The inventor realised that a space heating system is usually operated in a time controlled manner so as to only heat a building when it is occupied and/or the inhabitants are active. In the context of a building such as a school or office, this typically means the heating is run from 7 am to 8 am in the morning until 4 pm or 5 pm. The heating is off overnight.

In a domestic dwelling the heating may be on in the morning, off in the afternoon, on in the evening and off at night.

When the heating is initially switched off the delivery network 6, 14 may contain significant volumes of water, as may the space heaters. Volumes in excess of 80 litres are common in domestic systems and many thousands of litres in schools and other large buildings. Thus water may have been heated to 60° or so. If we take ambient temperature as 20° and an 80 litre system then it is clear there is

$$(60 - 20) \times 80000 \times 4.2 = 13.4 \text{ MJoules}$$

of heat in the water and that the heat is going to be allowed to leak into the building shortly after boiler switch off. The heat does warm the building, but its effect may decay away overnight so its heating benefit is largely lost.

The present invention includes a thermal store 20 which can be selectively switched into fluid flow communication, or heat transfer communication, with the distribution network 6, 14 by a valve 22. The operation of the valve 22 and the boiler/heater 2 may be controlled by a controller 24 which has been shown as being external to the heater 2 but which could be integrated within it. The controller may be responsive to one or more room thermostats (not shown).

The thermal store 20 comprises a tank 30 containing a volume of water. The tank 30 may be unvented (as shown) or vented to atmosphere, depending upon the designer's preferences. A heat exchanger 34 is provided within the tank. The heat exchanger might simply be a meandering or coiled pipe. In some embodiments a pressure relief device may be provided to allow fluid exchange to occur between the water 32 in the tank 30 and the water in the heat exchanger 34 such that excess pressure build up can be accommodated via safety features built into the heater 2.

In use, the valve 22 is normally set to the position shown in Figure 1 such that a flow loop is formed from the heater 2, to the space heaters 8, 10 and 12 and back to the boiler 2, without flow occurring via the thermal store 20.

Thus the water in the thermal store will probably be cool, i.e. at ambient temperature or a little above. In this mode the boiler can be operated under the control of the controller 24. The controller may implement a very simple control scheme based on switch on times and switch off times. The temperature to which the boiler heats the water or other fluid in the space heaters can be controlled by monitoring the fluid temperature at the boiler, monitoring the temperature obtained in a zone having a thermostat, or a combination of these approaches.

When the boiler comes to the end of its heating mode and is going to stop space heating for a significant period of time, the controller cuts the supply of fuel to a burner 40 within the boiler. However, the pump continues to run and the valve 22 is operated so as to place the heat exchanger 34 in the fluid flow path. Thus the warm water in the delivery network 6, 14 and in the space heaters can flow through the heat exchanger and give heat up to the thermal store. This can be done for a time determined by the system designer, or the temperature of the thermal store may be monitored by the controller 24 using a temperature sensor 50a, 50b and the pump 4 run until such time as the temperature in the thermal store stops rising, or the rate of increase drops below a threshold value.

Thus heat is transferred to the thermal store 20, which is insulated, and the heat is retained there.

In Figure 1, the store is shown as being "downstream" of the space heating circuit, and as being insertable in the return path to the boiler. This is however, not the only position that the store could be inserted at. The store could be inserted anywhere practical in the fluid flow path. The thermal store is generally physically large and is external.

At start up the boiler can place or keep the thermal store in the fluid flow loop and can run the pump without igniting the burner so as to recover the heat in the thermal store to pre-warm the water in the space heaters and in the delivery network. Once a pre-warm period has elapsed, the controller operates the valve 22 so as to remove the heat exchanger 34 of the thermal store from the fluid flow path. The normal space heating mode can then be resumed by igniting the burner within the boiler. Alternatively the water from the store could be passed into the boiler with the boiler burning fuel so as to provide an aggressive restart to the heating system.

As a further alternative the valve 22 may be a blending valve such that during start up cold water in the space heating circuit can be mixed with warm water from the thermal store, so as to bring the water at the return inlet to the boiler to an increased temperature, thereby enabling the water exiting the boiler to be warmer. This approach means that the thermal store does not become depleted so quickly or a smaller thermal store can be used.

The system may also operate to pre-warm the thermal store if the controller determines that an aggressive heating start is desirable.

The store may be selectively connectable to receive warmed water from the boiler 2 without that water having passed through the space heating circuit so as to allow the controller 24 to keep the store warm - or alternatively to deliberately warm the store. The store 30 may include an electric heating element 36 which can be energised to warm the water in the store. Thus the controller 24 may energise the heating element 36 to keep the store temperature at a target value, or may use the heating element 36 to pre-warm the store. This may be particularly beneficial if the occupants of a building go away, and they know what day they expect to return, but cannot be sure of the time. The occupants may instruct the controller to pre-warm the store a little while before their expected return to the building. Upon return to the building they can signal to the controller that the heat in the store should be released in order to achieve a rapid heating restart.

Heat from other sources, such as solar power or heat recovery from waste water may also be used to warm the thermal store. This allows useful energy to be stored even though the ultimate temperature from the other sources may be less than the temperature of water in the space heaters. Also the store can be a direct cylinder sharing the same primary water as that in the heating loop, and selectively isolatable from the heating loop by a controllable valve.

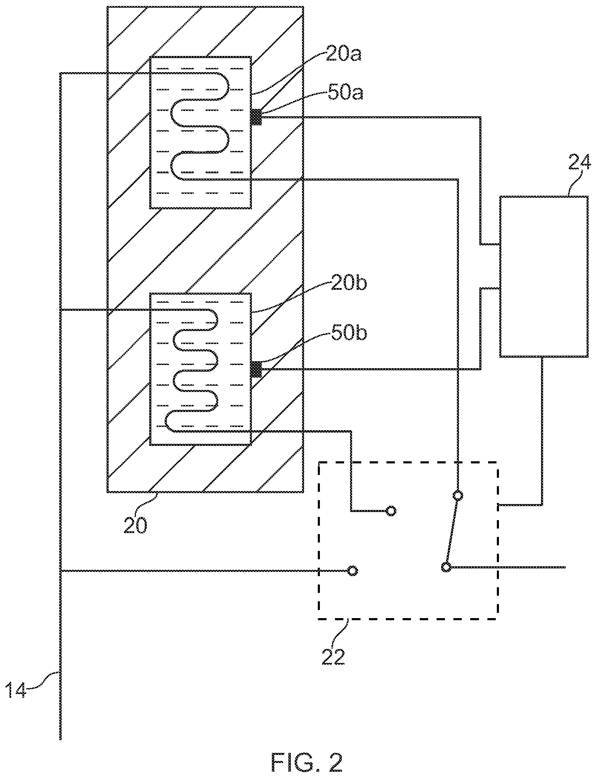

It will be realised that during transfer of heat from the space heating system to the thermal store the temperature in the thermal store initially rises, but may start to fall again as water in the space heating system becomes blended with that in the thermal store due, for example, to the various parallel flow paths around the space heating systems. However there may still be useful energy in the water that is circulating in the space heating system. Under such circumstances more of this energy can be recovered by providing a segmented thermal store which, as shown in Figure 2, is subdivided into stores 20a and 20b. The stores 20a and 20b have respective thermistors 50a and 50b such that the temperature in each store can be monitored. Thus, in use during the first part of the heat extraction process water from the return path 14 is arranged to flow through the heat exchanger in the first sub-store 20a so as to heat it. The controller 24 monitors the output of the thermistor 50a. The store temperature will rise, reach a maximum, and then start to decline. The controller 24 monitors the evolution of the temperature within the thermal store 50a, and once the temperature starts to decline it operates the valve 22 so as to isolate thermal store 20a and to direct water through thermal store 20b. The temperature in this store will also rise, reach a maximum, and then start to fall. The controller 24 monitors this temperature evolution via the thermistor 50b, and once the temperature starts to fall the controller operates the valve 22 so as to isolate the thermal store 20b. At this point both thermal stores are isolated and the heat recovery process can be inhibited.

Upon heating restart in the morning, heat can initially be recovered from the store 20b to pre-warm the heating circuit, and then from the store 20a.

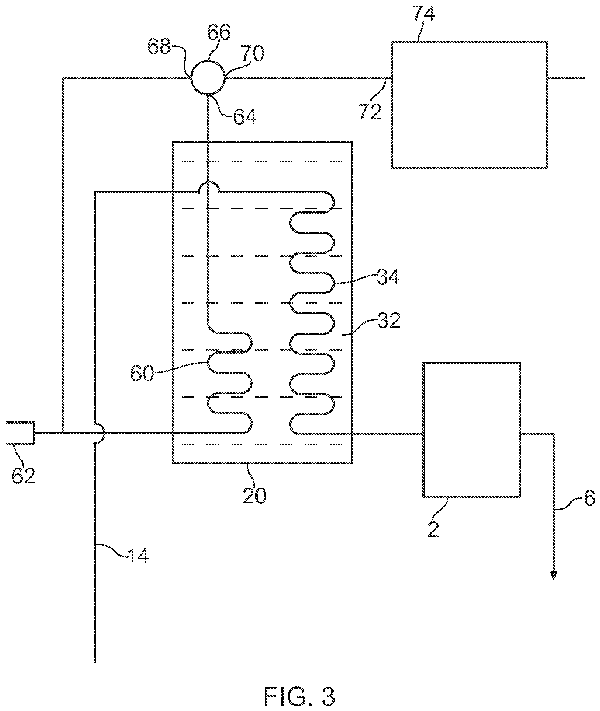

The heat which has been recovered from the space heating circuit can be used for other purposes rather than merely just being used to improve the space heating circuit restart. Figure 3 shows a variation on the arrangement in Figure 1 in which the thermal store 20 is provided with an additional coil 60. One end of the coil 60 is connected to a cold water main 62 whereas the other end of the coil 60 is connected to a first input 64 of a blending valve 66. A second input 68 of the blending valve is connected to the cold main 62. The blending valve 66 is controllable to selectively admit water via the input 64, although additional valving may also be provided to inhibit flow via that input. Thus, if appropriate, when a user requests domestic hot water for washing and the like the blending valve 66 can be operated to admit water via both the first input 64 and the second input 68 and to blend the water at its output 70 to a target temperature typically in the range 20° to 30°C for supply to the cold water input 72 of a water heater 74. Typically, though not necessarily, the water heater 74 and the heater 2 are implemented as the same device. Raising the temperature of the "cold water" supply to the heater 74 means that for a given output temperature less heat needs to be provided by the heater 74 and the heater 74 can be run at a reduced rate and/or the flow rate through the heater 74 can be increased. The use of the blending valve 66 is advantageous as it means irrespective of the temperature of the water in the thermal store 20, which might be quite hot at times, the heater 74 can be forced to fire and hence the rate at which heat is depleted from the thermal store 20 is reduced.

However, in some installations the system designer may choose to forgo the blending valve 66 and have the output of the coil 60 directly connected to the input 72 of the boiler 74.

Advantageously the controller 24 monitors the usage patterns of the boiler and can learn on a day to day basis when large draws of hot water are made by the user. It may then apply some heuristic or fuzzy logic rules to modify the operation of the heating system. For example, if a large draw of water indicative of a bath being run frequently occurs just before the time that the heating system is scheduled to shut down then the controller may choose to shut the heating system down early and suck hot water from the space heaters into the thermal store such that heat from the water in the store can be transferred to water passing through the coil 60 and the heated water can then be made available to the blending valve 60 such that hot water is available from the water heater 74 or such that the flow rate of hot water to the bath is enhanced. Similarly if the controller learns that a bath or similar is often run in the morning not long after the central heating restart then it may choose to inhibit the return of hot water to the space heating system from the thermal store such that the heat in the thermal store can be used to enhance the flow rate of domestic hot water to the bath or, it may choose to only partially deplete the thermal store such that the heat therein is partially used to pre-warm the space heating circuit and partially used to enhance the flow rate to the bath. The user may be able to monitor the decisions made by the controller, for example by establishing communication between a computing device, such as a laptop or a PDA, and a controller in order to see the rules it is applying. The user may then, if they wish, modify the rules if they feel it appropriate.

The controller can also monitor the use patterns of hot water by reference to boiler firings to deliver hot water. It may also be able to monitor use of cold water by reference to pressure changes on the domestic cold water network. This gives the controller an opportunity to monitor water use within a dwelling. This pattern can be used to adapt the control of the boiler to optimise its heat delivery, or to reduce running costs. The controller may be provided with a microprocessor and memory so as to perform processing within itself. As an alternative the controller may collect usage information and pass this back to a remote data processing resource for analysis and upload of revised operating data from that remote processing resource. Such a remote resource may also take account of temperature and wind speed when calculating operating parameters (on and off times, water temperature of the space heating circuit as a function of time) to pass back to the controller.

The controller can also monitor when use does not conform to an expected pattern. This may be of benefit when an elderly or infirm person needs monitoring. Lack of domestic hot water use for washing, or cold water use for flushing toilets, may indicate that the person is in distress and an alert can be issued by the controller to invoke a monitoring procedure. Such a procedure could be to call the person being monitoring, and/or inform a designated person or authority that the person being monitored is not following an acceptable usage pattern, and that they may be in distress.

The controller can get access to remote compiling facilities over any suitable interface, such as telephone, wireless telephone, radio or WiFi/internet.

Where a heating system constituting an embodiment of the invention is installed in several buildings of the same type and there is a reasonable correlation between the weather each house is exposed to it becomes possible to compare the performances of individual properties with a group of similar properties. This enables houses or buildings to be flagged as being worthy of further investigation if their energy use profile is significantly different from similar buildings. Thus, for example, houses with poor insulation may be identified from this analysis.

The controller may come with pre-programmed temperature versus time profiles over a day or week long period. These may then be adaptable to personal preference over an interface, such as via a computer connected to the controller or to a website hosted by a provider that downloads data to the controller. Additionally or alternatively the controller may have buttons or a dial so that the user can request an immediate increase or decrease in the target heating temperature so as to warm up or cool down their dwelling or building.

It is thus possible to provide a simple system for recovering heat from a space heating system for later use by the space heating system.

## Claims

1. A method of operating a building heating system (1), the heating system (1) comprising a heater (2), a plurality of space heaters (8, 10, 12), a thermal store (20) and a delivery network (6) connecting the space heaters (8, 10, 12) to the heater (2) and the thermal store (20), the method comprising, at the end of a heating mode where space heating is being stopped, opening a fluid flow path to the thermal store and operating a pump to pass warm fluid in the delivery network (6) and the space heaters (8, 10, 12) through the thermal store to give heat up to the thermal store.

2. A method of operating a heating system as claimed in claim 1, in which fluid flow through the thermal store is inhibited after a predetermined time.

3. A method of operating a heating system as claimed in claim 1, in which the temperature of the thermal store is monitored and the pump is run until such time as the temperature of the thermal store stops rising or the rate of increase drops below a threshold value.

4. A method of operating a heating system as claimed in claim 1, 2 or 3, comprising placing the thermal store in connection with the delivery network during heating start up and running the pump without igniting the burner of the heater (2) so as to recover heat from the thermal store to prewarm fluid in the space heaters and the delivery network.

5. A method as claimed in claim 4 further comprising operating a valve (22) so as to remove the thermal store from the fluid flow path once a pre-warm period has elapsed.

6. A method of operating a heating system as claimed in claim 1, 2 or 3 in which during heating start up warmed fluid from the thermal store is provided to the heater while a burner within the heater is operating.

7. A method of operating a heating system as claimed in any of claims 1 to 3, wherein a blending valve is provided such that during start up cold water from the space heaters is mixed with warm water passing through the thermal store to provide warmed water at a return inlet of the heater.

8. A method of operating a heating system as claimed in any preceding claim, wherein the heating system comprises a first thermal store and a second thermal store, and during a first heat extraction water from a return path from the space heaters is arranged to flow into the first thermal store, and once the temperature of the first thermal store stops increasing the first thermal store is isolated and water is directed to the second thermal store.

9. A method of operating a heating system as claimed in any of the preceding claims in which heat from the thermal store can be used to deliver heat to water that is used for washing and bathing.

## Patentansprüche

1. Verfahren zum Betreiben eines Gebäudeheizsystems (1), wobei das Heizsystem (1) einen Heizkörper (2), eine Vielzahl von Raumheizkörper (8, 10, 12), einen Wärmespeicher (20) und ein Zufuhrnetzwerk (6), das die Raumheizkörper (8, 10, 12) mit dem Heizkörper (2) und dem Wärmespeicher (20) verbindet, umfasst, wobei das Verfahren am Ende eines Heizmodus, in dem das Raumheizen gestoppt wird, das Öffnen eines Fluidströmungspfads zu dem Wärmespeicher und das Betreiben einer Pumpe umfasst, um Wärmefluid in dem Zufuhrnetzwerk (6) und den Raumheizkörpern (8, 10, 12) durch den Wärmespeicher zu leiten, um Wärme an den Wärmespeicher abzugeben.

2. Verfahren zum Betreiben eines Heizsystems nach Anspruch 1, bei welchem Fluidströmung durch den Wärmespeicher nach einer vorbestimmten Zeit unterbunden wird.

3. Verfahren zum Betreiben eines Heizsystems nach Anspruch 1, bei welchem die Temperatur des Wärmespeichers überwacht wird und die Pumpe bis zu einer derartigen Zeit läuft, zu der die Temperatur des Wärmespeichers aufhört zu steigen oder die Steigerungsrate unterhalb eines Schwellenwerts fällt.

4. Verfahren zum Betreiben eines Heizsystems nach Anspruch 1, 2 oder 3, umfassend das Platzieren des Wärmespeichers in Verbindung mit dem Zufuhrnetzwerk während das Heizen beginnt und das Laufenlassen der Pumpe, ohne den Brenner des Heizkörpers (2) zu entzünden, um so Wärme aus dem Wärmespeicher zurückzugewinnen, um Fluid in den Raumheizkörpern und dem Zufuhrnetzwerk vorzuwärmen.

5. Verfahren nach Anspruch 4, ferner umfassend das Betreiben eines Ventils (22), um so den Wärmespeicher aus dem Fluidströmungspfad zu entfernen, sobald eine Vorwärmphase vergangen ist.

6. Verfahren zum Betreiben eines Heizsystems nach Anspruch 1, 2 oder 3, bei welchem, während das Heizen beginnt, dem Heizkörper erwärmtes Fluid von dem Wärmespeicher bereitgestellt wird, während ein Brenner in dem Heizkörper in Betrieb ist.

7. Verfahren zum Betreiben eines Heizsystems nach einem der Ansprüche 1 bis 3, wobei ein Mischventil derart bereitgestellt ist, dass während des Hochfahrens kaltes Wasser von den Raumheizkörpern mit warmen Wasser, das durch den Wärmespeicher passiert, gemischt wird, um erwärmtes Wasser an einem Rückfuhreinlass des Heizkörpers bereitzustellen.

8. Verfahren zum Betreiben eines Heizsystems nach einem der vorhergehenden Ansprüche, wobei das Heizsystem einen ersten Wärmespeicher und einen zweiten Wärmespeicher umfasst, und während einer ersten Wärmeableitung Wasser aus einem Rückfuhrpfad aus den Raumheizkörpern angeordnet ist, um in den ersten Wärmespeicher zu strömen, und sobald die Temperatur des ersten Wärmespeichers aufhört zu steigen, der erste Wärmespeicher isoliert ist und Wasser zu dem zweiten Wärmespeicher geleitet wird.

9. Verfahren zum Betreiben eines Heizsystems nach einem der vorhergehenden Ansprüche, bei welchem Wärme aus dem Wärmespeicher verwendet werden kann, um Wärme an das Wasser zu liefern, welches zum Waschen und Baden verwendet wird.

**Revendications**

1. Procédé de fonctionnement d'un système de chauffage de bâtiment (1), le système de chauffage (1) comprenant un radiateur (2), une pluralité de radiateurs individuels (8, 10, 12), un accumulateur thermique (20) et un réseau de distribution (6) reliant les radiateurs individuels (8, 10, 12) au radiateur (2) et à l'accumulateur thermique (20), le procédé comprenant, à la fin d'un mode de chauffage où le chauffage individuel est arrêté, l'ouverture d'une trajectoire d'écoulement de fluide vers l'accumulateur thermique et l'actionnement d'une pompe pour faire passer le fluide chaud présent dans le réseau de distribution (6) et les radiateurs individuels (8, 10, 12) à travers l'accumulateur thermique pour transmettre la chaleur jusqu'à l'accumulateur thermique.

2. Procédé de fonctionnement d'un système de chauffage selon la revendication 1, dans lequel l'écoulement de fluide à travers l'accumulateur thermique est empêché après une durée prédéterminée.

3. Procédé de fonctionnement d'un système de chauffage selon la revendication 1, dans lequel la température de l'accumulateur thermique est surveillée et la pompe est actionnée jusqu'à ce que la température de l'accumulateur thermique cesse de monter ou que la vitesse d'augmentation tombe en dessous d'une valeur seuil.

4. Procédé de fonctionnement d'un système de chauffage selon la revendication 1, 2 ou 3, comprenant le placement de l'accumulateur thermique en liaison avec le réseau de distribution pendant le démarrage du chauffage et l'actionnement de la pompe sans allumer le brûleur du radiateur (2) de manière à récupérer la chaleur de l'accumulateur thermique pour préchauffer le fluide présent dans les radiateurs individuels et le réseau de distribution.

5. Procédé selon la revendication 4, comprenant en outre l'actionnement d'une soupape (22) de manière à retirer l'accumulateur thermique de la trajectoire d'écoulement du fluide une fois qu'une période de préchauffage s'est écoulée.

6. Procédé de fonctionnement d'un système de chauffage selon la revendication 1, 2 ou 3, dans lequel le fluide provenant de l'accumulateur thermique chauffé pendant le démarrage du chauffage est fourni au radiateur pendant qu'un brûleur à l'intérieur du radiateur est en marche.

7. Procédé de fonctionnement d'un système de chauffage selon la revendication 1 à 3, dans lequel une valve mélangeuse est prévue de manière que pendant le démarrage du chauffage, l'eau froide provenant des radiateurs individuels est mélangée avec l'eau chaude passant à travers l'accumulateur thermique pour fournir de l'eau réchauffée à une entrée de retour du radiateur.

8. Procédé de fonctionnement d'un système de chauffage suivant une des revendications précédentes, dans lequel le système de chauffage comprend un premier accumulateur thermique et un second

9. Procédé de fonctionnement d'un système de chauffage selon une des revendications précédentes, dans lequel la chaleur de l'accumulateur thermique peut être utilisée pour la délivrer à l'eau utilisée pour la lessive et le bain.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4332141

- JP 59202334 B